# FASCICULE DE BREVET EUROPEEN

(11) **EP 3 814 215 B1**
(45) Date de publication et mention de la délivrance du brevet: **10.08.2022**
(21) Numéro de dépôt: 19790588.8
(22) Date de dépôt: 07.06.2019
(51) Int. Cl.: B63H 9/06, B63B 15/00, B63H 9/10

(54) **SYSTEME DE TRACTION COMPRENANT AU MOINS DEUX VOILES CAPTIVES AVEC UN MAT POURVU DE MOYENS D'ACCOSTAGE DISTINCTS DEDIES CHACUN A UNE VOILE**
ZIEHSYSTEM MIT MINDESTENS ZWEI FESSELSEGELN MIT EINEM MAST VERSEHEN MIT VERSCHIEDENEN FESTMACHMITTELN, DIE JEWEILS EINEM SEGEL ZUGEORDNET SIND
TRACTION SYSTEM COMPRISING AT LEAST TWO CAPTIVE SAILS WITH A MAST PROVIDED WITH DISTINCT MOORING MEANS EACH DEDICATED TO ONE SAIL

(30) Priorité: 11.06.2018 FR 1855077
(43) Date de publication de la demande: 05.05.2021
(73) Titulaire: AIRSEAS, 31300 Toulouse (FR)
(72) Inventeur: ARROUY, Pascal, 82600 AUCAMVILLE (FR); BRAINES, Jeremy, 31820 PIBRAC (FR); CORTET, Emmanuel, 33185 LE HAILLAN (FR); GAGNAIRE, Benoit, 31470 FONSORBES (FR); ORTEGA, Jean-Marc, 31700 BLAGNAC (FR); RIGAUD, Jérôme, 81800 COUFOULEUX (FR); HIVER, Vianney, 31100 TOULOUSE (FR)
(74) Mandataire: Brevalex
(86) Numéro de dépôt international: PCT/FR2019/051389
(87) Numéro de publication internationale: WO 2019/239045

(56) Documents cités:
- WO-A1-2005/100148
- WO-A1-2005/100150
- DE-A1-102015 111 224

## Description

### DOMAINE TECHNIQUE

L'invention concerne un système de traction comportant au moins deux voiles captives, destiné notamment à équiper un navire pour le tracter.

### ÉTAT DE LA TECHNIQUE ANTÉRIEURE

L'invention concerne plus particulièrement un système comprenant des voiles dites captives c'est-à-dire reliées chacune par un câble de traction à un élément tel qu'un navire à tracter, comme divulgué en figure 6 du brevet européen EP1740453. Dans ce type d'application, les voiles utilisées sont du type des voiles utilisées en kite-surf ou en parapente, ces voiles comportant une aile souple avec différentes lignes de commande et de raccordement au câble de traction.

Les documents WO 2005/100150 A1 et DE 10 2015 111224 A1 divulguent aussi des systèmes de traction et des moyens d'accostage des voiles.

Un tel système de traction peut aussi être utilisé comme convertisseur d'énergie en étant installé au sol, chaque voile entraînant un générateur électrique mis en rotation par le déplacement du câble résultant de la traction de la voile sous l'effet du vent.

Typiquement, une telle installation est implantée en partie avant du pont d'un navire commercial de type cargo, pour lui procurer une traction additionnellement à son système de propulsion motorisé, de façon à réaliser une économie de consommation de carburant significative.

Une telle installation doit permettre de déployer aisément chaque voile lorsque le vent a une orientation et une intensité satisfaisantes, et permettre aisément de ramener, accoster et plier chaque voile, par exemple lorsque les conditions météorologiques ne sont plus appropriées.

Néanmoins, installer des moyens de déploiement d'accostage et de pliage pour chaque voile s'avère être trop encombrant vis-à-vis de l'espace disponible en partie avant du pont d'un navire de type cargo.

Le but de l'invention est d'apporter un agencement permettant le déploiement et l'accostage de plusieurs voiles, tout en ayant un encombrement compatible avec l'espace disponible en partie avant d'un pont de navire commercial.

### EXPOSÉ DE L'INVENTION

A cet effet, l'invention a pour objet un système de traction comprenant un poste fixe et au moins une première voile et une seconde voile, la première voile comportant une aile et étant reliée à un treuil du poste fixe par un premier câble de traction, la seconde voile comportant une seconde aile et étant reliée à un treuil du poste fixe par un second câble de traction, le poste fixe incluant un mât portant des premiers moyens d'accostage de la première aile à ce mât, et des seconds moyens d'accostage de la seconde aile à ce mât.

Avec cet agencement, un seul poste fixe qui est relativement compact du fait qu'il comporte un unique mât portant les différents moyens d'accostage, est suffisant pour déployer, ramener plier et ranger plusieurs voiles.

L'invention a également pour objet un système ainsi défini, dans lequel le mât porte en outre des premiers moyens de pliage de la première aile, et des seconds moyens de pliage de la seconde aile.

L'invention a également pour objet un système ainsi défini, dans lequel les premiers moyens d'accostage et/ou de pliage de la première aile comprennent un premier convoyeur portant des premiers coulisseaux coulissant dans un premier rail, et dans lequel les seconds moyens d'accostage et/ou de pliage de la seconde aile comprennent un second convoyeur portant des seconds coulisseaux coulissant dans un second rail.

L'invention a également pour objet un système ainsi défini, dans lequel le premier rail et le second rail comportent une portion commune.

L'invention a également pour objet un système ainsi défini, dans lequel le poste fixe comporte un premier treuil recevant le premier câble de traction et un second treuil recevant le second câble de traction.

L'invention a également pour objet un système ainsi défini, comprenant un moteur d'entraînement couplé aux deux treuils par des moyens de transmission agencés pour entraîner sélectivement l'un ou l'autre des deux treuils.

L'invention a également pour objet un système ainsi défini, dans lequel le poste fixe est monté pour être apte à pivoter autour d'un axe vertical, par rapport au support sur lequel ce poste fixe est installé.

L'invention a également pour objet un système ainsi défini, dans lequel le premier câble et le second câble ont des longueurs différentes lorsque les ailes sont en phase de traction.

L'invention a également pour objet un système ainsi défini, comportant des moyens de pilotage configurés pour maintenir chaque voile à une position optimale maximisant la traction générée par cette voile, en décrivant répétitivement des trajectoires en huit passant par cette position optimale.

L'invention a également pour objet un système ainsi défini, dans lequel les moyens de pilotage sont configurés pour déphaser les trajectoires en huit décrites par les deux voiles.

### BRÈVE DESCRIPTION DES DESSINS

La figure 1 est une vue d'ensemble d'un système équipant un navire conformément à l'invention ;
La figure 2 est une vue d'ensemble d'un système selon l'invention ;
La figure 3 est une vue d'ensemble d'un système selon l'invention sans sa plateforme ;
La figure 4 est une vue d'ensemble d'une voile selon l'invention ;
La figure 5 est une vue d'ensemble d'une voile approchant du poste fixe conformément à l'invention ;
La figure 6 est une vue d'ensemble d'une voile ramenée au poste fixe conformément à l'invention ;
La figure 7 est une vue d'ensemble d'une voile accostée au mat conformément à l'invention ;
La figure 8 est une voile en début d'opération de pliage conformément à l'invention ;
La figure 9 est une voile pliée conformément à l'invention ;
La figure 10 est une vue d'ensemble d'un système selon l'invention avant rangement de la première voile dans l'espace de stockage ;
La figure 11 est une vue d'ensemble d'un système selon l'invention durant le rangement de la première voile dans l'espace de stockage ;
La figure 12 est une vue d'ensemble d'un système selon l'invention lorsque la première voile est rangée dans l'espace de stockage.

### EXPOSÉ DÉTAILLÉ DE MODES DE RÉALISATION PARTICULIERS

L'idée à la base de l'invention est d'utiliser simultanément au moins deux voiles pour tracter un navire tout en prévoyant une unique plateforme pour déployer et récupérer ces voiles l'une après l'autre, en assurant une mutualisation optimale des moyens nécessaires au déploiement et à la récupération de ces voiles.

Dans l'exemple ci-après, l'invention est décrite pour un système comportant deux voiles, mais elle s'applique aussi bien à un système comportant un plus grand nombre de voiles.

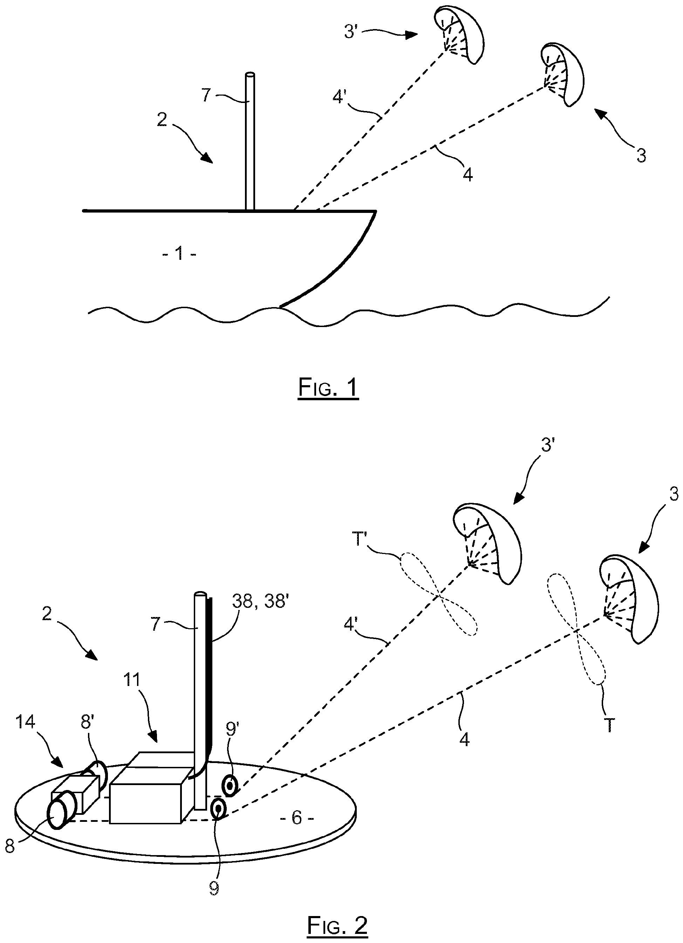

Sur la figure 1, un navire 1 est équipé d'un poste fixe 2 selon l'invention situé en partie avant de son pont, et par lequel ce navire 1 est tracté par une première voile 3 captive à laquelle il est relié par un premier câble de traction 4, et par une seconde voile 3' captive à laquelle il est relié par un second câble de traction 4'.

Le poste fixe 2 qui est représenté seul sur la figure 2 comporte une plateforme 6 portant un mât central 7 ainsi qu'un premier treuil 8 et une première poulie articulée 9 sur sa moitié tribord, et un second treuil 8' et une seconde poulie articulée 9' sur sa moitié bâbord. Le premier câble 4 passe dans la poulie 9 pour être retenu par le premier treuil 8, et le second câble 4' passe dans la seconde poulie 9' pour être retenu par le second treuil 8'.

Chaque câble est freiné et bloqué afin de transmettre les efforts de traction au navire, lorsque les voiles sont déployées et en phase de traction. Comme détaillé dans la suite, le mât 7 permet d'assurer l'accostage le pliage et le rangement de chaque voile, ainsi que son déploiement.

Complémentairement, un espace de stockage 11 est situé à l'arrière du mât 7, entre ce mât et l'ensemble de treuils, il comporte un premier compartiment 12 qui s'étend sur la moitié tribord de la plateforme, pour recevoir la première voile 3, et un second compartiment 12' s'étendant sur la moitié bâbord pour recevoir la seconde voile 3'.

La plateforme 6 est avantageusement fixée au pont du navire de façon à permettre au poste de tourner dans son ensemble autour d'un axe vertical pour avoir une orientation optimale par rapport au vent lorsque les voiles sont déployées, et/ou lorsque les voiles sont ramenées au poste fixe pour y être accostées, pliées et rangées.

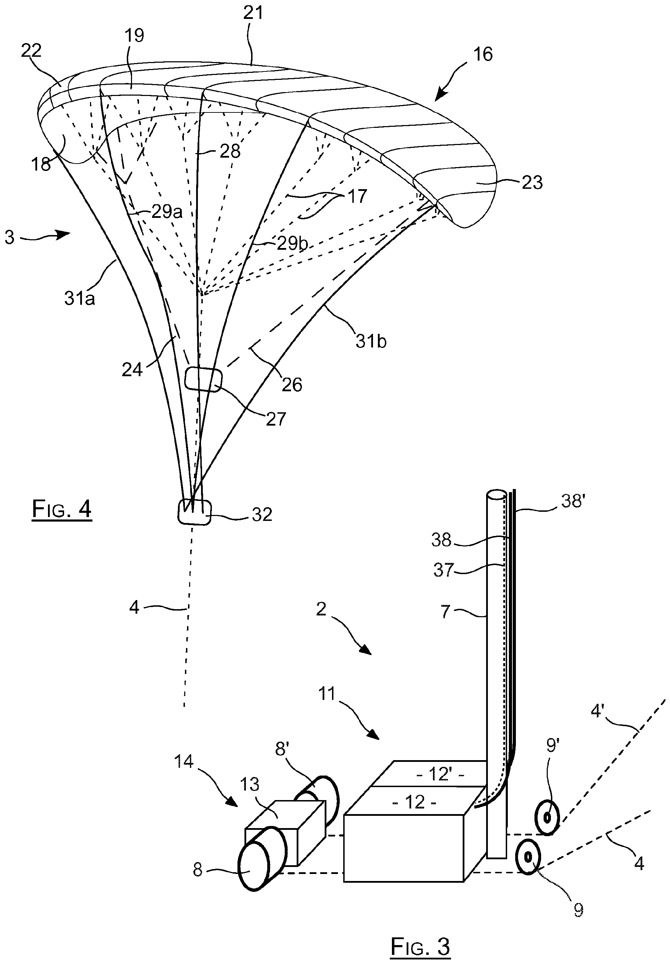

Comme visible plus clairement sur la figure 3, un moteur d'entraînement 13, par exemple électrique, est prévu entre les treuils 8 et 8', en étant relié à l'un et l'autre des treuils par un système de transmission agencé pour entraîner sélectivement l'un ou l'autre de ces treuils. L'ensemble formé par les treuils et le moteur constitue un groupe de traction 14 qui est séparé du mât par l'espace de stockage 11.

Comme visible sur la figure 4, la première voile 3 comporte une aile souple 16 reliée au câble 4 par des suspentes 17 ayant chacune une extrémité reliée à une face inférieure 18 de cette aile 16 et une autre extrémité reliée au câble de traction 4.

L'aile souple 16 de la première voile 3 est formée d'un ensemble de toiles assemblées, elle comporte un bord d'attaque 19 et un bord de fuite 21 s'étendant chacun d'un côté gauche 22 à un côté droit 23 de cette aile, pour un observateur situé face à la voile et dos au vent. La voile 3 est également équipée de deux écoutes latérales 24, 26 ayant leurs extrémités fixées respectivement aux côtés gauche 22 et droit 23 de l'aile, leurs autres extrémités étant maintenues par un organe de commande 27 porté par le câble de traction 4. Cet organe de commande 27 permet de manœuvrer et de stabiliser l'aile de façon autonome, c'est-à-dire sans qu'un opérateur n'ait à piloter la voile.

Cette voile 3 est également équipée d'une ligne supérieure centrale 28, d'une paire médiane de lignes de pliage latérales 29a, 29b et d'une paire inférieure de lignes de pliage latérales 31a, 31b. La ligne supérieure 28 comporte une extrémité supérieure fixée au milieu du bord d'attaque 19, et une extrémité inférieure portée par un élément bas 32 qui est lui-même porté par le câble de traction 4.

La ligne latérale médiane 29a comporte une extrémité supérieure fixée à mi-distance entre le milieu et l'extrémité gauche du bord d'attaque 19, et une extrémité inférieure portée par l'élément bas 32. La ligne latérale médiane 29b est symétrique de la ligne 29a en comportant une extrémité fixée à mi-distance entre le milieu et l'extrémité droite du bord d'attaque, et une autre extrémité portée par l'élément bas 32.

La ligne latérale inférieure 31a comporte une extrémité supérieure fixée à l'extrémité gauche du bord d'attaque 19, et une extrémité inférieure portée par l'élément bas 32. La ligne latérale inférieure 31b est symétrique de la ligne 31a, avec une extrémité fixée à l'extrémité droite du bord d'attaque 19, et une autre extrémité portée par l'élément bas 32.

Le retour de la première voile 3 au poste fixe 2 est assuré en la plaçant d'abord à la verticale du navire pour réduire la traction qu'elle exerce, cette manœuvre étant gérée par l'organe de commande 27, avant de commander le premier treuil 8 en rotation pour enrouler le câble 4 de façon à ramener la voile 3 au poste 2.

Le poste est équipé d'une première embase non représentée de réception de l'élément bas 32 de la première voile 3, cette première embase étant traversée par le câble de traction 4 qui peut être libre de coulisser à travers celle-ci. En fin d'approche de la première voile 3, l'élément bas 32 de cette première voile s'emboîte sur la première embase pour se positionner et s'orienter de façon précise par rapport au pied du mât 7.

Complémentairement, le mât 7 porte un premier convoyeur 37 portant des coulisseaux et glissant le long d'un premier rail 38, et qui permettent d'assurer l'accostage, le pliage et le rangement de cette première voile 3, ces coulisseaux étant déplacés dans le rail 38 par le convoyeur 37.

Ce premier rail 38 guide plus particulièrement un coulisseau supérieur 33, un coulisseau médian 34 et un coulisseau inférieur 36, déplaçables le long de ce mât 7 dans le rail 38, chaque coulisseau 33, 34, 36 étant équipé à son extrémité libre d'un organe de renvoi qui est un mousqueton dans le cas présent.

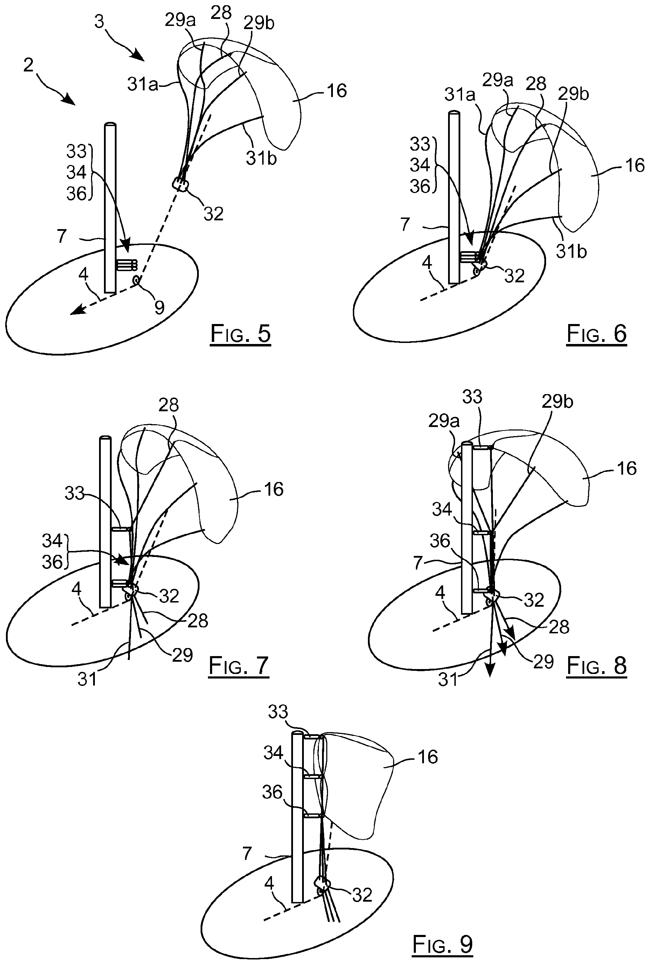

Ces coulisseaux 33, 34, 36 sont positionnés en partie inférieure du mât 7 avant le retour de la première aile, comme par exemple lors de son approche, représentée sur la figure 5, pour être en vis-à-vis de l'élément bas 32 une fois que la voile a été ramenée au poste fixe.

A ce stade, le mousqueton équipant l'extrémité du coulisseau supérieur est passé autour de la ligne supérieure 28, le mousqueton du coulisseau médian 34 est passé autour de la paire 29 de lignes de pliage 29a et 29b, et le mousqueton du coulisseau inférieur 36 est passé autour de la paire 31 de lignes de pliage inférieures 31a, 31b, ce qui correspond à la situation de la figure 6. Pour ces opérations, les mousquetons des extrémités des coulisseaux sont passés autour des lignes par un opérateur ou bien de façon semi-automatisée ou automatisée.

Les coulisseaux 33, 34 et 36 sont alors déplacés par le premier convoyeur le long du mât, comme représenté sur la figure 7, jusqu'à atteindre leurs positions de références, à savoir respectivement haut du mât, aux trois quarts de la hauteur du mât, et à mi-hauteur du mât, ce qui correspond à la situation de la figure 8.

La ligne supérieure 28 est alors tirée vers le bas par son extrémité inférieure. L'extrémité inférieure de la ligne 28 traverse par exemple l'élément bas 32 pour être solidarisée à celui-ci, tout en pouvant être tirée depuis la face inférieure de cet élément bas 32 de manière à coulisser à travers celui-ci.

Lorsque le coulisseau 33 a atteint sa position haute et que la ligne 28 a été complètement tirée, la voile 3 est accostée au poste 2, c'est-à-dire que le centre du bord d'attaque de son aile 16 est maintenu contre le mât 7, ce qui est le cas dans la configuration de la figure 8.

La paire de lignes de pliage 29 est alors tirée vers le bas, sous l'élément bas 32, pour débuter le pliage de l'aile en ramenant les parties gauche et droite de son bord d'attaque contre le mât. Complémentairement, la paire de lignes de pliage 31 est tirée vers le bas sous l'élément bas 32 pour ramener les extrémités gauche et droite de l'aile 16 contre le mât 7, de manière à terminer le pliage comme illustré sur la figure 8. Lorsque la voile est pliée, elle a une configuration correspondant à celle de la figure 9.

Chaque ligne ou paire de lignes de pliage est tirée vers le bas après raccordement de son extrémité à un treuil non représenté, par un opérateur ou de façon semi-automatisée ou automatisée.

L'aile 16 de la première voile 3 est ensuite rangée en la ramenant dans le premier compartiment 12 de l'espace de stockage 11.

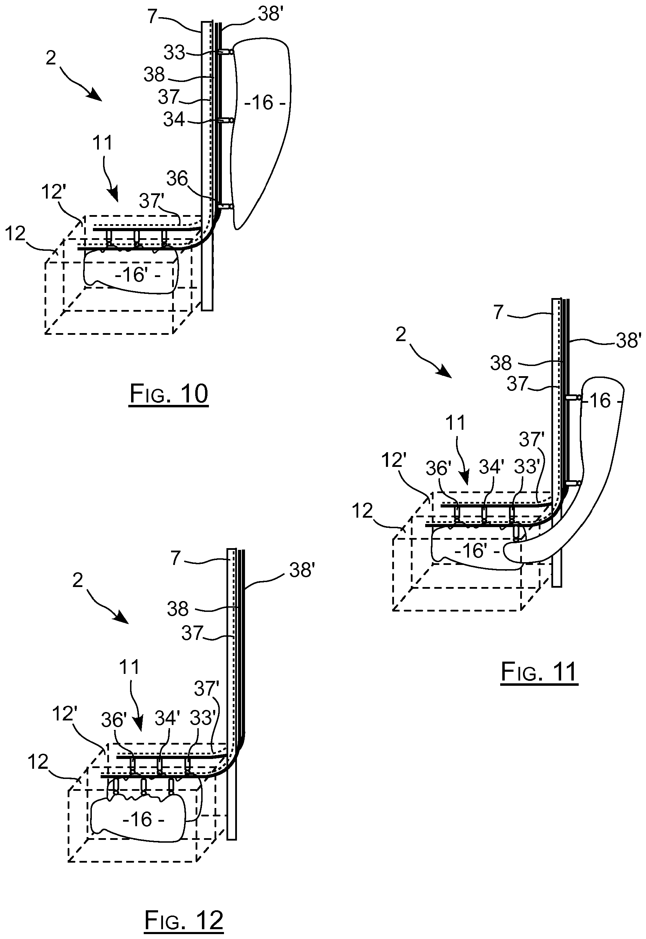

A cet effet, le premier convoyeur 37 et le premier rail 38 qui apparaissent plus clairement sur les figures 10 à 12 comportent une portion rectiligne portée par le mât 7, mais qui se prolonge sous ce mât 7 en une portion incurvée elle-même prolongée par une extension horizontale située en partie supérieure du premier compartiment 12 de l'espace 11. Chaque coulisseau 33, 34, 36 est déplacé le long du premier rail 38 par le premier convoyeur 37 depuis sa position de référence le long du mât, jusqu'à l'extension horizontale de ce premier rail 38 s'étendant dans le premier compartiment 12.

Le rangement de la première voile 3 est obtenu en commandant le premier convoyeur pour déplacer les coulisseaux 33, 34, 36 le long de leur rail, vers le bas. Durant ce déplacement, la partie inférieure de l'aile 16 pliée atteint d'abord le pied du mât 7, comme sur la figure 10, pour ensuite suivre la portion incurvée, comme visible sur la figure 11, afin de se positionner entièrement le long de la portion horizontale de ce rail, c'est-à-dire dans le premier compartiment 12.

Le premier convoyeur 37 constitue ainsi avec les coulisseaux qu'il porte dans le premier rail 38 un moyen ou système porté par le mât 7 qui est dédié à l'accostage au pliage et au rangement de la première voile 3, ainsi qu'à son déploiement. De manière analogue, le second convoyeur 37' forme avec les coulisseaux qu'il porte dans le second rail 38' un moyen ou système porté par le mât et qui est dédié à l'accostage, au pliage et au rangement de la seconde voile 3' ainsi qu'à son déploiement.

Comme il ressort des figures, la seconde voile 3' présente la même structure générale que la première voile 3, en comportant elle aussi une aile souple, repérée par 16', qui est maintenue par des suspentes et équipée de lignes de pliage s'étendant de son bord d'attaque jusqu'à son élément bas, et des écoutes reliées à un organe de commande autonome.

Complémentairement, le poste fixe 2 est également équipé d'une seconde embase non représentée, pour recevoir l'élément bas de la seconde voile 3', et le mât 7 porte également un second rail 38' pourvu d'une seconde série de coulisseaux pour l'accostage, le pliage et le rangement de la seconde voile 3' ainsi que son déploiement.

Le retour, l'accostage, le pliage et le rangement de la seconde voile 3' se déroule de la même manière que pour la première voile 3, mais en utilisant le second convoyeur 37' pour déplacer les coulisseaux 33' 34' et 36' qu'il porte le long du second rail 38', ce qui aboutit au rangement de cette seconde voile 3' dans le second compartiment 12', le second rail 38' se prolongeant dans le second compartiment 12'.

En pratique, les voiles sont ramenées et déployées l'une après l'autre : la seconde voile est ramenée seulement une fois que la première voile a été ramenée accostée pliée et rangée dans son compartiment, ou bien avant le retour de cette première voile comme dans les figures 10 à 12. Il en va de même du déploiement : la seconde voile est déployée une fois que la première a été déployée et est à une distance suffisante du navire, ou bien avant déploiement de la première voile.

D'une manière générale, le déploiement de chaque voile est obtenu en réalisant les mêmes séquences de retour, d'accostage, de pliage et de rangement, mais en ordre inverse.

Chaque convoyeur est par exemple formé d'une chaîne longeant et/ou guidée dans le rail dans lequel glissent les coulisseaux que cette chaîne porte, cette chaîne étant déplacée par un système d'entraînement motorisé et commandé, et guidée le long de ce rail.

Eventuellement, les deux rails 38 et 38' comportent une portion verticale commune longeant le mât 7. Dans ce cas, un aiguillage à la base de la portion verticale commune est prévu pour aiguiller les premiers coulisseaux vers la portion incurvée puis la portion horizontale du premier rail, et pour aiguiller les seconds coulisseaux vers la portion incurvée puis la portion horizontale du second rail.

Par ailleurs, le premier câble 4 et le second câble 4' ont des longueurs différentes, pour réduire les risque d'interférence entre les deux voiles en phase de vol, c'est-à-dire lorsqu'elles sont toutes deux déployées.

Complémentairement, ces deux voiles sont pilotées par leurs organes de commandes respectifs pour évoluer dans des régions différentes tout en générant une traction optimale. Les deux systèmes de commande peuvent alors être reliés l'un et l'autre à un système de pilotage situé au poste de fixe, pour échanger des données avec ce système. Dans ce cas, le système de pilotage transmet par exemple à chaque organe de commande une définition de la région de l'espace dans laquelle il doit évoluer.

Une autre possibilité est de prévoir que l'une des voiles, par exemple la première voile 3 est maître, et que son organe de commande 27 communique avec l'organe de commande de la seconde voile 3' en lui adressant une définition de la région de l'espace dans laquelle il doit évoluer. Dans ce cas, le premier organe de commande 27 a un fonctionnement de type maître et le second organe de pilotage un fonctionnement de type esclave.

Chaque organe de commande pilote la voile qui le porte pour la faire évoluer dans la région de l'espace qui lui est attribuée, tout en maintenant cette voile à une position optimale maximisant la traction.

En pratique, une voile tend à se placer spontanément au plus près du vent à une position statique où elle se maintient de façon stable, mais où elle génère un effort de traction qui est minimal, et lorsqu'une telle voile est à une position générant une traction plus importante, elle tend à s'en écarter pour rejoindre une position statique.

Ainsi, le maintien d'une telle voile à une position optimale maximisant la traction, nécessite de la piloter dynamiquement pour lui faire faire des virages afin qu'elle passe et repasse à la position optimale de manière à s'y maintenir.

Dans ce contexte, les organes de commande manœuvrent les voiles pour les maintenir continuellement à leurs positions optimales en réalisant des virages selon des trajectoires dites en huit, ces trajectoires étant représentées sur la figure 2 où elles sont repérées par T et T'.

Lorsqu'une aile décrit une trajectoire en huit, elle accélère dans les portions rectilignes et ralentit dans les portions incurvées de cette trajectoire, ce qui génère une variation périodique de la traction qui est pénalisante en termes de fatigue des éléments soumis aux efforts de traction au niveau du poste fixe.

Autrement dit, l'intensité de l'effort de traction généré par une aile pilotée selon une trajectoire en huit a une forme ondulée, ce qui sollicite en fatigue les éléments de fixation du poste fixe au pont du navire, par l'intermédiaire desquels les efforts de traction sont transmis au navire.

Avantageusement, les organes de commande de chaque voile sont configurés pour déphaser les mouvements des deux voiles lorsqu'elles réalisent toutes deux des trajectoires en huit, ce qui permet de réduire significativement l'ondulation des efforts de traction cumulés des deux voiles. Ce déphasage consiste à assurer que lorsque l'une des voiles parcourt une portion rectiligne de sa trajectoire en huit, l'autre voile est au contraire dans une portion curviligne de sa propre trajectoire.

## Revendications

1. Système de traction, notamment pour navire, comprenant un poste fixe (2) et au moins une première voile (3) et une seconde voile (3'), la première voile (3) comportant une aile (16) et étant reliée à un treuil (8) du poste fixe (2) par un premier câble de traction (4), la seconde voile (3') comportant une seconde aile (16') et étant reliée à un treuil (8') du poste fixe (2) par un second câble de traction (4'), le poste fixe (2) incluant un mât (7) **caractérisé en ce que** ledit mât (7) porte
des premiers moyens d'accostage (33, 37, 38) de la première aile (16) à ce mât (7), et des seconds moyens d'accostage (33', 37', 38) de la seconde aile (16') à ce mât (7).

2. Système selon la revendication 1, dans lequel le mât (7) porte en outre des premiers moyens de pliage (34, 36) de la première aile (16), et des seconds moyens de pliage (34', 36') de la seconde aile (16').

3. Système selon la revendication 1 ou 2, dans lequel les premiers moyens d'accostage et/ou de pliage de la première aile (16) comprennent un premier convoyeur (37) portant des premiers coulisseaux (33, 34, 36) coulissant dans un premier rail (38), et dans lequel les seconds moyens d'accostage et/ou de pliage de la seconde aile (16') comprennent un second convoyeur (37') portant des seconds coulisseaux (33', 34', 36') coulissant dans un second rail (38').

4. Système selon la revendication 3, dans lequel le premier rail (38) et le second rail (38') comportent une portion commune.

5. Système de traction selon l'une des revendications précédentes, dans lequel le poste fixe (2) comporte un premier treuil (8) recevant le premier câble de traction (4) et un second treuil (8') recevant le second câble de traction (4').

6. Système selon l'une des revendications précédentes, comprenant un moteur (13) d'entraînement couplé aux deux treuils (8, 8') par des moyens de transmission agencés pour entraîner sélectivement l'un ou l'autre des deux treuils (8, 8').

7. Système selon l'une des revendications précédentes, dans lequel le poste fixe (2) est monté pour être apte à pivoter autour d'un axe vertical, par rapport au support sur lequel ce poste fixe (2) est installé.

8. Système selon l'une des revendications précédentes, dans lequel le premier câble (4) et le second câble (4') ont des longueurs différentes lorsque les ailes sont en phase de traction.

9. Système selon l'une des revendications précédentes, comportant des moyens de pilotage configurés pour maintenir chaque voile (3, 3') à une position optimale maximisant la traction générée par cette voile (3, 3'), en décrivant répétitivement des trajectoires en huit (T, T') passant par cette position optimale.

10. Système selon la revendication 9, dans lequel les moyens de pilotage sont configurés pour déphaser les trajectoires en huit (T, T') décrites par les deux voiles (3, 3').

## Patentansprüche

1. Zugsystem, insbesondere für ein Schiff, das eine feste Station (2) und mindestens ein erstes Segel (3) und ein zweites Segel (3') umfasst, wobei das erste Segel (3) einen Flügel (16) umfasst und durch ein erstes Zugseil (4) mit einer Winde (8) der festen Station (2) verbunden ist, wobei das zweite Segel (3') einen zweiten Flügel (16') umfasst und durch ein zweites Zugseil (4') mit einer Winde (8') der festen Station (2) verbunden ist, wobei die feste Station (2) einen Mast (7) einschließt, **dadurch gekennzeichnet, dass** der Mast (7) erste Mittel zum Anlegen (33, 37, 38) des ersten Flügels (16) an diesen Mast (7), und zweite Mittel zum Anlegen (33', 37', 38) des zweiten Flügels (16') an diesen Mast (7) trägt.

2. System nach Anspruch 1, wobei der Mast (7) weiter erste Mittel zum Einfalten (34, 36) des ersten Flügels (16), und zweite Mittel zum Einfalten (34', 36') des zweiten Flügels (16') trägt.

3. System nach Anspruch 1 oder 2, wobei die ersten Mittel zum Anlegen und/oder zum Einfalten des ersten Flügels (16) einen ersten Förderer (37) umfassen, der erste Schlitten (33, 34, 36) trägt, die in einer ersten Schiene (38) gleiten, und wobei die zweiten Mittel zum Anlegen und/oder zum Einfalten des zweiten Flügels (16') einen zweiten Förderer (37') umfassen, der zweite Schlitten (33', 34', 36') trägt, die in einer zweiten Schiene (38') gleiten.

4. System nach Anspruch 3, wobei die erste Schiene (38) und die zweite Schiene (38') einen gemeinsamen Abschnitt umfassen.

5. Zugsystem nach einem der vorstehenden Ansprüche, wobei die feste Station (2) eine erste Winde (8), die das erste Zugseil (3) aufnimmt, und eine zweite Winde (8') umfasst, die das zweite Zugseil (4') aufnimmt.

6. System nach einem der vorstehenden Ansprüche, das einen Antriebsmotor (13) umfasst, der durch Übertragungsmittel, die so eingerichtet sind, dass sie selektiv die eine oder die andere der zwei Winden (8, 8') antreiben, mit den zwei Winden (8, 8') gekoppelt ist.

7. System nach einem der vorstehenden Ansprüche, wobei die feste Station (2) so angebracht ist, dass sie in Bezug auf die Halterung, auf der diese feste Station (2) installiert ist, um eine vertikale Achse schwenken kann.

8. System nach einem der vorstehenden Ansprüche, wobei das erste Seil (4) und das zweite Seil (4') verschiedene Längen aufweisen, wenn sich die Flügel in der Zugphase befinden.

9. System nach einem der vorstehenden Ansprüche, das Steuermittel umfasst, die so ausgelegt sind, dass sie jedes Segel (3, 3') in einer optimalen Position halten, die den durch dieses Segel (3, 3') erzeugten Zug maximiert, indem sie wiederholt achtförmige Bahnen (T, T') beschreiben, die durch diese optimale Position verlaufen.

10. System nach Anspruch 9, wobei die Steuermittel so ausgelegt sind, dass sie die von den zwei Segeln (3, 3') beschriebenen achtförmigen Bahnen (T, T') phasenverschieben.

## Claims

1. Traction system, notably for a ship, comprising a fixed station (2) and at least one first sail (3) and one second sail (3'), the first sail (3) comprising a wing (16) and being connected to a winch (8) of the fixed station (2) by a first traction cable (4), the second sail (3') comprising a second wing (16') and being connected to a winch (8') of the fixed station (2) by a second traction cable (4'), the fixed station (2) including a mast (7) caracterized in that the said mast (7) carries first means of mooring (33, 37, 38) the first wing (16) to this mast (7), and second means of mooring (33', 37', 38) the second wing (16') to this mast (7).

2. System according to claim 1, wherein the mast (7) further carries first means for folding (34, 36) the first wing (16), and second means for folding (34', 36') the second wing (16').

3. System according to claim 1 or 2, wherein the first means for mooring and/or for folding the first wing (16) comprise a first conveyor (37) carrying first sliders (33, 34, 36) sliding in a first rail (38), and wherein the second means for mooring and/or for folding the second wing (16') comprise a second conveyor (37') carrying second sliders (33', 34', 36') sliding in a second rail (38').

4. System according to claim 3, wherein the first rail (38) and the second rail (38') comprise a common portion.

5. Traction system according to one of the preceding claims, wherein the fixed station (2) comprises a first winch (8) receiving the first traction cable (4) and a second winch (8') receiving the second traction cable (4').

6. System according to one of the preceding claims, comprising a drive motor (13) coupled to the two winches (8, 8') by means of transmission arranged to selectively drive one or the other of the two winches (8, 8').

7. System according to one of the preceding claims, wherein the fixed station (2) is mounted to be able to pivot about a vertical axis, with respect to the support on which this fixed station (2) is installed.

8. System according to one of the preceding claims, wherein the first cable (4) and the second cable (4') have different lengths when the wings are in traction phase.

9. System according to one of the preceding claims, comprising means for steering configured to maintain each sail (3, 3') in an optimum position that maximises the traction generated by this sail (3, 3'), by repetitively describing eight-shaped trajectories (T, T') passing through this optimum position.

10. System according to claim 9, wherein the means for steering are configured to de-phase the eight-shaped trajectories (T, T') described by the two sails (3, 3').
